# EUROPÄISCHE PATENTSCHRIFT

(11) **EP 1 424 845 B1**
(45) Veröffentlichungstag und Bekanntmachung des Hinweises auf die Patenterteilung: **05.12.2007**
(21) Anmeldenummer: 03103786.4
(22) Anmeldetag: 14.10.2003
(51) Int. Cl.: H04M 7/00

(54) **Verfahren zur Integration eines paketorientierten Netzwerks in ein Kommunikationssystem**
Method of integrating a packet network in a communications system
Procédé pour intégrer un réseau à commutation par paquets dans un système de communication

(30) Priorität: 29.11.2002 DE 10255923
(43) Veröffentlichungstag der Anmeldung: 02.06.2004
(73) Patentinhaber: SIEMENS AKTIENGESELLSCHAFT, 80333 München (DE)
(72) Erfinder: Burger, Christian, 1194, Wien (AT)

(56) Entgegenhaltungen:
- EP-A2- 1 189 415
- US-A1- 2002 118 671
- US-A1- 2002 150 080
- US-B1- 6 226 287
- SAMBEEK VAN M: "IP TELEPHONY REPLACING THE OLD WORLD...OR CREATING THE NEW ONE?" JOURNAL OF THE INSTITUTION OF BRITISH TELECOMMUNICATIONS ENGINE ERS, BRITISH TELECOMMUNICATIONS ENGINEERING, LONDON, GB, Bd. 1, Nr. 3, Juli 2000 (2000-07), Seiten 30-35, XP000959145 ISSN: 1470-5826
- NAKANISHI Y ET AL: "SMALL SIZE IP-PBX NEAX2000IPS (INTERNET PROTOCOL SERVER)" NEC RESEARCH AND DEVELOPMENT, NIPPON ELECTRIC LTD. TOKYO, JP, Bd. 43, Nr. 4, Oktober 2002 (2002-10), Seiten 272-279, XP001132851 ISSN: 0547-051X

## Beschreibung

Die Erfindung betrifft ein Verfahren und eine Anordnung zur Integration eines paketorientierten Netzwerks in ein Kommunikationssystem.

Zeitgemäße Kommunikationssysteme sind durch ein Zusammenwachsen von Informations- und Kommunikationsinfrastrukturen gekennzeichnet. Hierbei sind Kommunikationssysteme bekannt, die eine Sprach- und/oder Videokommunikation über paketorientierte Netzwerke unterstützen. Ein derartiges Verfahren wird in der Fachwelt meist mit dem übergeordneten Begriff 'Voice over IP' bzw. abkürzend 'VoIP' bezeichnet, wobei das Kürzel 'IP' für 'Internet Protocol', ein allgemein verbreitetes Protokoll zum Datenaustausch über paketorientierte Netzwerke steht. Für die VoIP-Kommunikation sind dabei die Protokolle H.323 bzw. SIP (Session Initiation Protocol) weit verbreitet.

SIP ist ein Signalisierungsprotokoll für Internettelephonie sowie für weitere Dienste wie Konferenzinteraktionen, Ereignisbenachrichtigung, Nachrichtenübermittlung usw. Dieses Protokoll wurde von der Arbeitsgruppe MMUSIC (Multiparty Multimedia Session Control) der Arbeitsgruppe IETF (Internet Engineering Task Force) entwickelt. Der Standard H.323 ist ein internationaler ITU-T-Standard (International Telecommunication Union - Telecommunications Standardization Sector) für die Sprach-, Daten- und Videokommunikation über paketvermittelnde Netzwerke.

Neben einer Infrastruktur zum Austausch paketorientierter Daten ist eine Telephonieinfrastruktur mit festzugeordneten Leitungen zu Kommunikationsendgeräten nach wie vor weit verbreitet. Aus wirtschaftlichen und sicherheitstechnischen Gründen ist daher in vielen Kommunikationssystemen kein voll ständiger Wechsel auf eine rein paketorientierte Architektur vorgesehen. Statt dessen werden bestehende Kommunikationssysteme mit einer Telefonieinfrastruktur auf Basis festzugeordneter Leitungen um Einrichtungen zur Anbindung von Kommunikationsendgeräten auf Basis eines paketorientierten Netzwerks erweitert. Derartige Kommunikationssysteme werden daher oftmals als 'konvergente' Kommunikationssysteme bezeichnet, womit eine Zusammenführung beider Infrastrukturen bezeichnet wird.

Eine Steuerung der Kommunikationsendgeräte erfolgt in Kommunikationssystemen mit einer Telefonieinfrastruktur auf Basis festzugeordneter Leitungen durch eine zentrale Kommunikationseinrichtung.

Die zentrale Kommunikationseinrichtung stellt Leistungsmerkmale zur Verfügung und führt eine Vermittlung zwischen kommunikationssysteminternen bzw. -externen Kommunikationsendgeräten durch.

In der Architektur rein paketorientierter VoIP-Kommunikationssysteme ist eine zentrale Vermittlung und Steuerung von Kommunikationspartnern hingegen nicht vorgesehen, statt dessen erfolgt die Vermittlungs- und Leistungsmerkmalsteuerung in reinen VoIP-Kommunikationssystemen dezentral in den Kommunikationsendgeräten bzw. in verteilten Leitrechnersystemen.

Für eine umfassende Integration von VoIP-basierten Kommunikationsendgeräten in ein konvergentes Kommunikationssystem ist daher eine bloße wechselseitige Umsetzung paketorientierter und zeitkontinuierlicher Nutzinformation - d.h. Sprach- bzw. Videodaten - nicht ausreichend. Ein konvergentes Kommunikationssystem erfordert darüber hinaus eine Umsetzung von Signalisierungsinformation zwischen den beiden Infrastrukturen. Signalisierungsinformationen enthalten Daten zur Verbindungssteuerung, Signalisierung usw.

In 'klassischen' - d.h. zentralen, z.B. nach dem Prinzip eines Zeitmultiplex zwischen Kommunikationsendgeräten mit festzugeordneten Leitungen vermittelnden - Kommunikationseinrichtungen Kommunikationseinrichtung ist dabei z.B. das Signalisierungsprotokoll 'DSS1' bekannt. Das DSS1-Protokoll ('Digital Subscriber System No. 1') ist ein auf ITU-T 1.411 ('International Telecommunication Union') basierendes europäisches ISDN-Protokoll ('Integrated Services Digital Network') für den Signalisierungskanal des europäischen Euro-ISDN.

In modernen Kommunikationssystemen enthalten Signalisierungsinformationen zudem erweiterte Leistungsmerkmale unterstützende Daten, z.B. zur Anzeige eines Namens und weiterer Informationen eines rufenden bzw. gerufenen Teilnehmers an einem Kommunikationsendgerät.

Mit einer Verwendung von - dem Fachmann auch als 'Gateway' bekannten - Erweiterungsbaugruppen für 'klassische' Kommunikationseinrichtungen zur Anbindung von VoIP-Kommunikationsendgeräten ist derzeit nicht das gesamte Leistungsmerkmalspektrum sowohl an den drahtgebundenen als auch an den VoIP-Kommunikationsendgeräten verfügbar.

Aus dem Aufsatz "IP telephony replacing the old world...or creating the new one?"; Sambeek Van M; Journal of the Institution of British Telecommunications Engineers; London GB, ist eine Architektur zur Integration eines VOIP-Kommunikationssystems in ein traditionelles PBX-Kommunikationsendgerät bekannt.

Aufgabe der Erfindung ist es, Mittel anzugeben, bei deren Anwendung eine Integration eines paketorientierten Netzwerks in ein Kommunikationssystem mit einer zentralen Kommunikationseinrichtung ermöglicht ist, wobei sowohl der zentralen Kommunikationseinrichtung als dem paketorientierten Netzwerk zugeordnete Kommunikationsendgeräte eine identische Leistungsmerkmalausgestaltung aufweisen sollen.

Eine Lösung der Aufgabe erfolgt hinsichtlich ihres Verfahrensaspekts durch ein Verfahren mit den Merkmalen des Patentanspruchs 1 und hinsichtlich ihres Vorrichtungsaspekts durch eine Anordnung mit den Merkmalen des Patentanspruchs 20.

Erfindungsgemäß wird zur Integration eines paketorientierten Netzwerks an ein durch eine zentrale Kommunikationseinrichtung gesteuertes Kommunikationssystem ein Gateway und ein Kommunikationsleitrechner eingesetzt. Durch das Gateway erfolgt eine wechselseitige Umsetzung von Signalisierungs- und Nutzdaten der zentralen Kommunikationseinrichtung in von dezentralen Signalisierungs- und Nutzdatendiensten ausgetauschten Daten. Diese dezentralen Signalisierungs- und Nutzdatendiensten kommen in über das paketorientierte Netzwerk verteilten Kommunikationsleitrechnern zur Ausführung. In einem mit einer Applikationsschnittstelle der zentralen Kommunikationseinrichtung verbundenen Leitrechner werden Kommunikationsdaten dieser Applikationsschnittstelle in für die Kommunikationsleitrechner verarbeitbare Zustandsinformationen umgesetzt.

Ein wesentlicher Vorteil des erfindungsgemäßen Verfahrens ist darin zu sehen, dass mit der wechselseitigen Umsetzung von Kommunikationsdaten der Applikationsschnittstelle und im paketorientierten Netzwerk übertragenen Zustandsinformationen für alle Kommunikationsendgeräte im Kommunikationssystem eine einheitliche Leistungsmerkmalsgestaltung verfügbar ist.

Auf diese Weise ist beispielsweise eine Anmeldung eines mit dem paketorientierten Netzwerk verbundenen VoIP-Kommunikationsendgerät (Voice over Internet Protocol) an der zentralen Kommunikationseinrichtung durchführbar, die unter ausschließlicher Verwendung eines Gateways nicht zu realisieren ist. Das Gateway kann funktionsbedingt lediglich eine wechselseitige Umsetzung von paketorientierten Signalisierungs- und Nutzdaten in von der zentralen Kommunikationseinrichtung auswertbaren Signalisierungs- und Nutzdaten vornehmen, wobei die mit der zentralen Kommunikationseinrichtung ausgetauschten Signalisierungsdaten nicht zur Steuerung und Signalisierung aller angebotenen Funktionen und Leistungsmerkmale ausreichen.

Vorteilig ist weiterhin, dass zur Realisierung der erfindungsgemäßen Lösung eine Schnittstelle zum Austausch von Kommunikationsdaten mit einem Rechnersystem verwendet wird, welche in Form einer Applikationsschnittstelle in vielen zentralen Kommunikationseinrichtungen verwirklicht ist. Eine bauliche Umgestaltung der zentralen Kommunikationseinrichtung ist damit zur Realisierung des erfindungsgemäßen Verfahrens nicht notwendig.

Vorteilhafte Weiterbildungen der Erfindung sind in den Unteransprüchen angegeben.

In vorteilhafter Weise wird für Daten, welche im paketorientierten Netzwerk zwischen dezentralen Signalisierungs- und Nutzdatendiensten ausgetauscht werden, das weitverbreitete SIP-Protokoll (Session Initiation Protocol) verwendet. Zur Definition der Struktur und des Aufbaus ausgetauschter Daten gemäß des SIP-Protokolls ist dabei z.B. das in elektronischer Form publizierte Dokument Handley, M. et al.: ' SIP: Session Initiation Protocol', Network Working Group (Hrsg.), Request for Comments: 2543, März 1999, heranzuziehen.

In vorteilhafter Weise wird zur Kommunikation mit der Applikationsschnittstelle der weitverbreitete Standard CSTA (Computer Supported Telephony Applications) verwendet. CSTA ist ein Standard der ECMA (European Computer Manufacturers Association) für rechnerunterstützte Telekommunikationsanwendungen zur Kopplung von Rechnersystemen und Telephonieeinrichtungen. Diese Kopplung wird in Fachkreisen auch mit 'Computer Telefonie Integration', abkürzend CTI, bezeichnet. Der Standard CSTA legt den Aufbau und die Art der Nachrichten für die verschiedenen Dienstmerkmale fest. Es handelt sich bei CSTA also um keine spezifizierte Schnittstelle, sondern vielmehr um einen Leitfaden zur standardisierten Implementierung einer CTI-Funktionalität. Als Beispiele für die standardkonforme Umsetzung sind die Programmierschnittstellen TSAPI und TAPI zu nennen, die auf den CSTA-Definitionen aufbauen.

Zur Definition der Struktur und des Aufbaus ausgetauschter Kommunikationsdaten gemäß des Standards CSTA sind dabei z.B. folgende in elektronischer Form publizierte Dokumente - Herausgeber ist jeweils das 'ECMA Technical Committee' - heranzuziehen:
- ECMA-179, Juni 1992, 'Services for Computer Supported Telecommunications Applications (CSTA) Phase I';
- ECMA-180, Juni 1992, ' Protocol for Computer Supported Telecommunications Applications (CSTA) Phase I'

Diese Dokumente beziehen sich auf einen mit 'Phase 1' bezeichneten Publikationsstand, wobei ggf. auch weitere Dokumente gemäß der zum Anmeldezeitpunkt verfügbaren Publikationsstände 'Phase 2' und 'Phase 3' anwendbar sind.

Ein Ausführungsbeispiel mit weiteren Vorteilen und Ausgestaltungen der Erfindung wird im folgenden anhand der Zeichnung näher erläutert.

Dabei zeigen:
- Fig. 1:: ein Strukturbild zur schematischen Darstellung eines Kommunikationssystems;
- Fig. 2:: ein Strukturbild zur schematischen Darstellung eines Steuernachrichtenaustauschs in einem Kommunikationssystem zur Übermittlung von Gesprächsdaten;
- Fig. 3:: ein chronologisches Ablaufbild zur schematischen Darstellung eines Steuernachrichtenaustauschs zur Realisierung einer Auswertung von Rufdaten eines Teilnehmers;
- Fig. 4A bis Fig. 4C:: ein chronologisches Ablaufbild mit einer schematischen Darstellung eines Steuernachrichtenaustauschs zur Realisierung einer Rufsignalisierung im gesamten Kommunikationssystem;
- Fig. 5:: ein chronologisches Ablaufbild mit einer schematischen Darstellung eines Steuernachrichtenaustauschs zur Realisierung einer kommunikationssystemweiten Verfügbarkeitsinformation eines Teilnehmers;
- Fig. 6:: ein chronologisches Ablaufbild mit einer schematischen Darstellung eines Steuernachrichtenaustauschs zur Realisierung einer kommunikationssystemweiten Verfügbarkeitsinformation eines Teilnehmers in Folge eines Ausfalls eines Kommunikationsendgerät; und
- Fig. 7:: ein chronologisches Ablaufbild mit einer schematischen Darstellung einer Synchronisation von Steuerdaten.

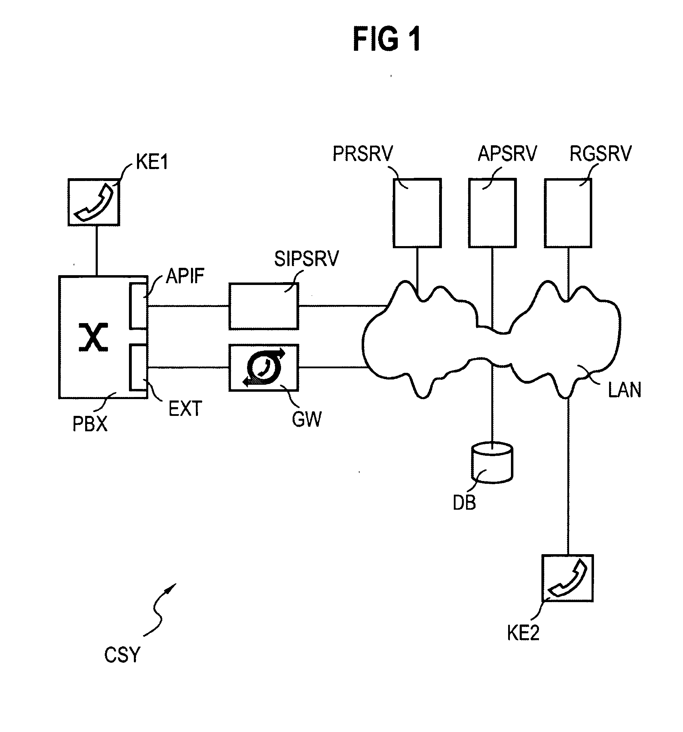

In Fig. 1 ist ein Kommunikationssystem CSY dargestellt. Das Kommunikationssystem CSY wird von einer zentralen Kommunikationseinrichtung PBX gesteuert. Diese zentrale Kommunikationseinrichtung PBX ist in alternativen Ausführungsformen auch als ein in fachüblicher Weise ausgestalteter - nicht dargestellter - Kommunikationseinrichtungsverbund realisierbar. In der vorgenannten Ausführungsform steuert jede zentrale Kommunikationseinrichtung PBX im Kommunikationseinrichtungsverbund ein Subsystem CSY des vom Kommunikationseinrichtungsverbund verwalteten - nicht dargestellten - Gesamtkommunikationssystems.

Die zentrale Kommunikationseinrichtung PBX ist z.B. gemäß eines zeitschlitzorientierten Vermittlungsverfahren - in der Fachwelt oftmals auch als 'Time Division Multiplex', TDM - ausgestaltet. Eine Steuerung über Signalisierungsdaten und ein Austausch von Nutzdaten - beispielsweise Sprach- und/oder Videodaten - von mit der zentralen Kommunikationseinrichtung PBX verbundenen Kommunikationsendgeräten, hier das erste Kommunikationsendgerät KE1, erfolgt beispielsweise unter Anwendung des ISDN-Protokolls ('Integrated Services Digital Network').

Die zentrale Kommunikationseinrichtung PBX verfügt über eine Schnittstelle EXT zu Erweiterungsbaugruppen, über die Signalisierungs- und Nutzinformationen mit diesen Erweiterungsbaugruppen ausgetauscht werden. Mit einem ISDN-Protokoll erfolgt der Austausch von Nutzinformation in üblicher Weise über einen sogenannte B-Kanal, während der Austausch von Signalisierungsinformation über einen getrennten D-Kanal erfolgt.

Die zentrale Kommunikationseinrichtung PBX verfügt weiterhin über eine Applikationsschnittstelle APIF durch welche eine Kommunikation der zentralen Kommunikationseinrichtung PBX mit auf einem - nicht dargestellten - Rechnersystem ausgeführten Telephoniefunktionen unterstützende Applikationen erfolgt. Ein Beispiel derartiger - nicht dargestellter - Applikationen sind sogenannte Geschäftsapplikationen ('Business Applications') welche oftmals zur Integration von Telephoniefunktionen in ein auf mehrere Bearbeiter eines sogenannten 'Call Centers' verteilten Kundenanfragenbearbeitungssystems genutzt werden. Die Geschäftsapplikation tauscht hierbei mit der zentralen Kommunikationseinrichtung PBX Rufsteuerungs- und Überwachungsinformation aus, welche in der Fachwelt üblicherweise auch als 'Call-Control'- bzw. 'Monitoring'-Informationen bezeichnet werden

Über ein paketorientiertes Netzwerk LAN sind mehrere Kommunikationsendgeräte - in der Zeichnung ist exemplarisch lediglich ein zweites Kommunikationsendgerät KE2 dargestellt - auf Basis einer paketorientierten Kommunikation - auch VoIP (Voice over Internet Protocol) genannt - untereinander verbunden.

Als Signalisierungsprotokoll wird im Ausführungsbeispiel das 'Session Initiation Protocol', kurz SIP verwendet. Es handelt sich hierbei um ein modular aufgebautes Protokoll, das eine Gesprächssignalisierung, Lokalisierung und Registrierung von Kommunikationsendgeräten unterstützt. Das erfindungsgemäße Verfahren ist im übrigen unabhängig von der Wahl eines speziellen Kommunikations- bzw. Signalisierungsprotokolls und daher z.B. auch für ein Signalisierungsprotokoll gemäß des ITU-T-Standards H.323 einsetzbar.

Das zweite Kommunikationsendgerät KE2 tauscht paketorientierte Daten mit einem entsprechenden Kommunikationspartner oder auch mit Steuerfunktionen durchführenden Kommunikationsleitrechnern PRSRV,APSRV,RGSRV aus.

Eine Lokalisierung eines Teilnehmers wird durch einen Lokalisierungsleitrechner PRSRV gesteuert. Der Lokalisierungsleitrechner wird in der Fachwelt auch mit 'Presence- and Availability Server' bezeichnet. Durch den Lokalisierungsserver PRSRV erfolgt eine Verwaltung verfügbarer Teilnehmer, sowie welcher Teilnehmer wann und wie erreichbar ist. Diese Verwaltung erfolgt in Form einer Benachrichtigung an Applikationen, die weitere SIP-Funktionalitäten unterstützen.

Derlei Applikationen werden beispielsweise auf einem Applikationsleitrechner APSRV bzw. 'Application Server' zur Ausführung gebracht. Der Applikationsleitrechner APSRV unterstützt zudem Video- bzw. Audiokonferenzfunktionen, und steuert bzw. registriert - in Zusammenarbeit mit dem Lokalisierungsleitrechner PRSRV - die Verfügbarkeit eines Teilnehmers. Der Applikationsleitrechner APSRV kooperiert zu diesem Zweck fallweise mit sogenannten 'Basic Clients', d.h. Dienstgeber die in anderen - nicht dargestellten - Rechnersystemen verfügbar sind.

Der Registrierungsleitrechner RGSRV - oftmals auch als 'Registration and Proxy Server' bezeichnet - steuert eine Registrierung eines SIP-Teilnehmers und veranlasst gegebenenfalls eine Leitwegführung eines durchzustellenden Rufes an das für den Teilnehmer registrierte Kommunikationsendgerät KE2.

Zur Unterstützung von operativen bzw. administrativen Vermittlungs- und Leistungsmerkmalfunktionen sowie zur Unterstützung von Wartungsfunktionen ist dem VoIP-Kommunikationssystem LAN eine Datenbank DB zugeordnet, die in der Fachwelt oftmals auch als OAM-Datenbank (Operation, Administration and Maintenance) bezeichnet wird.

Das paketorientierte Netzwerk LAN umfasst damit ein - im folgenden auch VoIP-Kommunikationssystem LAN genanntes - Kommunikationssubsystem, in dem eine Vermittlungs- und Leistungsmerkmalsteuerung dezentral, das heißt in verteilten VoIP-Kommunikationsendgeräten wie dem zweiten Kommunikationsendgerät KE2 und mit dezentralen Kommunikationsleitrechnern PRSRV,APSRV,RGSRV erfolgt. Dieses VoIP-Kommunikationssystem LAN ist mit erfindungsgemäßen Mitteln mit der zentralen Kommunikationseinrichtung PBX verbunden.

Die Verbindung des VoIP-Kommunikationssystems LAN erfolgt über einen an die Applikationsschnittstelle APIF der zentralen Kommunikationseinrichtung PBX angeschlossenen Leitrechner SIPSRV sowie über ein an die Schnittstelle EXT der zentralen Kommunikationseinrichtung PBX angeschlossenes Gateway GW. Der Leitrechner SIPSRV sowie das Gateway GW sind mit dem VoIP-Kommunikationssystem LAN über - nicht dargestellte - Netzwerkschnittstellen verbunden.

Im folgenden wird unter weiterer Bezugnahme auf die Funktionseinheiten der Fig. 1 ein Austausch von Steuerdaten im Kommunikationssystem CSY näher erläutert.

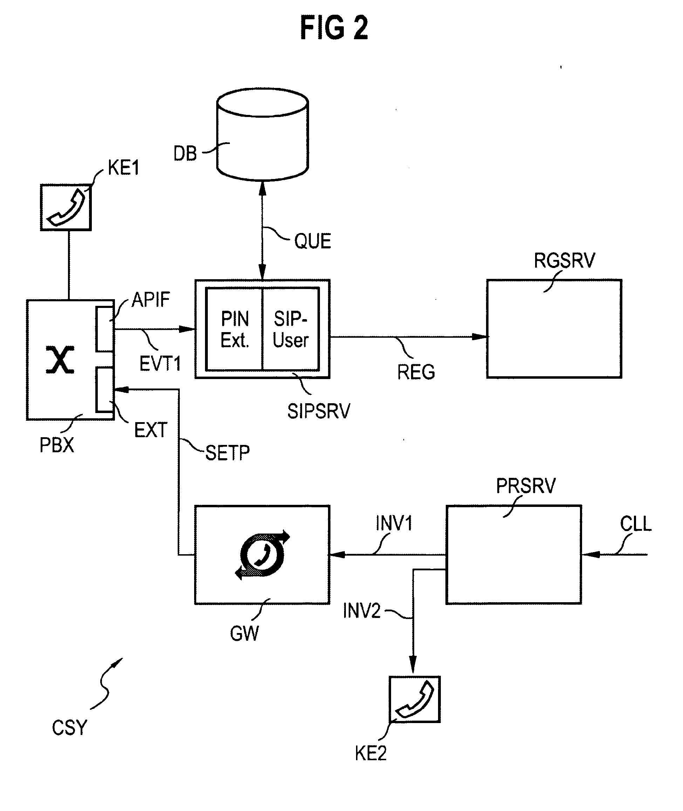

Fig. 2 zeigt eine Untermenge von bereits aus Fig. 1 bekannten Komponenten des Kommunikationssystems CSY. Anhand der Fig. 2 wird im folgenden ein Austausch von Steuerdaten dargestellt.

Es wird zunächst ein Verfahren zur Registrierung eines Teilnehmers im VoIP-Kommunikationssystem LAN dargestellt. Ein Teilnehmer meldet sich an dem von der zentralen Kommunikationseinrichtung PBX verwalteten ersten Kommunikationsendgerät KE1 durch Eingabe einer persönlichen Identifizierungsnummer, PIN, an.

Eine Registrierung des Teilnehmers im VoIP-Kommunikationssystem LAN dient beispielsweise dazu, für den Teilnehmer eingehende Rufe an ein VoIP-Kommunikationsendgerät wie z.B. das zweite Kommunikationsendgerät zu übergehen bzw. weiterzuleiten.

Zum Zwecke dieser Registrierung erfolgt eine Auswertung von Kommunikationsdaten der Applikationsschnittstelle APIF und eine Generierung einer im VoIP-Kommunikationssystem LAN gültigen Registrierungsnachricht. Gemäß der Ausgestaltung des im VoIP-Kommunikationssystem LAN ausgestalteten Signalisierungsprotokolls SIP entspricht diese Registrierungsnachricht einer für Registrierungszwecke ausgestalteter SIP-Nachricht. Bei der Generierung der Registrierungsnachricht durch den mit der Applikationsschnittstelle APIF kommunizierenden Leitrechner SIPSRV erfolgt eine Umsetzung der PIN-Funktionalität auf die Registrierungsnachricht. Der Empfänger dieser Registrierungsnachricht im VoIP-Kommunikationssystem LAN ist beispielsweise der Registrierungsleitrechner RGSRV.

Die Applikationsschnittstelle APIF ist beispielsweise für eine bidirektionalen Austausch von Kommunikationsdaten gemäß des Protokolls CSTA (Computer Supported Telephony Applications) vorgesehen. Das erfindungsgemäße Verfahren ist im übrigen auf - im Ausführungsbeispiel nicht dargestellte - alternative Kommunikationsprotokolle zum Austausch von Kommunika tionsdaten der zentralen Kommunikationseinrichtung PBX mit einem - nicht dargestellten - Rechnersystem anwendbar.

Eine Anmeldung des Teilnehmers an der zentralen Kommunikationseinrichtung PBX erfolgt durch Eingabe einer ihm zugeordneten PIN am ersten Kommunikationsendgerät KE1. Das Kommunikationsendgerät KE1 wird daraufhin diesem Teilnehmer durch die zentrale Kommunikationseinrichtung PBX zugewiesen. Die Zuweisung des durch seine PIN identifizierten Teilnehmers zum ersten Kommunikationsendgerät KE1 wird über die Applikationsschnittstelle APIF mit einer CSTA-Ereignisnachricht EVT1 an den Leitrechner SIPSRV gemeldet. Diese CSTA-Ereignisnachricht EVT1 wird in der Fachwelt auch mit 'Mobile User Activate' bezeichnet, wobei das Attribut 'mobil' zum Ausdruck bringt, dass der Teilnehmer sich an einem im Kommunikationssystem CSY weitgehend beliebigen Kommunikationsendgerät anmelden kann.

Die von der Ereignisnachricht EVT an den Leitrechner SIPSRV übermittelten Daten enthalten beispielsweise die PIN zur Identifikation des Teilnehmers sowie eine Identifikation des dem Teilnehmer zugeordneten ersten Kommunikationsendgeräts KE1. Die Identifikation des ersten Kommunikationsendgeräts KE1 erfolgt beispielsweise durch Angabe der (Nebenstellen-) Rufnummer diese Kommunikationsendgeräts KE1, welche in Fachkreisen oftmals auch als 'Extension' bezeichnet wird.

Der Leitrechner hat nun die Aufgabe, aus der PIN und der Extension - in Fig. 2 abkürzend mit 'Ext.' bezeichnet - eine Registrierungsmeldung REG zur Anmeldung eines SIP-Teilnehmers - 'SIP-User' - zu erzeugen. Dazu wird im Leitrechner SIPSRV eine Datenbankabfrage QUE an die Datenbank DB ausgelöst. Die Datenbank enthält einen Datenbestand zur Zuordnung eines SIP-Teilnehmers zur PIN des Teilnehmers. Das Ergebnis dieser Abfrage QUE wird an den Leitrechner SIPSRV übermittelt. Beispielsweise wird auf diese Weise einer PIN des Inhalts '45898' ein Texteintrag des Inhalts 'Christian' zugeordnet, welcher den SIP-Teilnehmer charakterisiert. Zusätzlich er folgt für einen mobilen Teilnehmer ein Schreibzugriff auf einen Datenbestand der Datenbank DB, durch den die aktuell angemeldete Nebenstelle des Teilnehmers in Form der Nebenstellennummer - Extension - des Kommunikationseintrags KE1 in einen Datenbestand der Datenbank DB eingetragen wird.

Mit Hilfe des den SIP-Teilnehmer charakterisierenden Texteintrags - 'Christian' - wird vom Leitrechner SIPSRV eine Registrierungsmeldung REG erzeugt und an den Registrierungsleitrechner RGSRV gesendet. Die Registrierungsnachricht REG enthält in einem Informationsteil beispielsweise die Textinhalte 'Register: christian@sip.com' und 'Contact: 45898@sip.com'.

Mit Hilfe eines weiteren Informationsfeldes in den Datenbankeinträge der Datenbank DB ist eine Rufweiterleitung bzw. Rufumleitung seitens des VoIP-Kommunikationssystems LAN einstellbar. Ein derartiges Informationsfeld enthält beispielsweise die Identifikationsnummer des Kommunikationsendgeräts, auf das eingehende Rufe umzuleiten sind.

Eine derartige Rufweiterleitung bzw. -umleitung ist in Form eines von zentralen Kommunikationseinrichtungen PBX angebotenen Leistungsmerkmals bekannt und wird an einem mit dieser verbundenen Kommunikationseinrichtung KE1 durch Eingabe eines Steuerbefehls veranlasst. Der Vorteil, eine Rufweiterleitung bzw. -umleitung über das VoIP-Kommunikationssystem LAN einzurichten, liegt darin, dass das zugehörige paketorientierte Netzwerk LAN Zugriffe von weiträumig gespannten Informationsnetzwerken wie beispielsweise dem sogenannten - nicht dargestellten - Internet ermöglicht. Einen Netzzugang vorausgesetzt, ist es einem Teilnehmer von nahezu jedem Punkt aus möglich, mittels eines sogenannten SIP-Clients - z.B. einer portablen Rechnereinheit - eine Umleitung seines Kommunikationsendgeräts KE1 auf ein anderes Umleitungsziel, beispielsweise das zweite Kommunikationsendgerät KE2, zu veranlassen. Das Umleitungsziel kann alternativ auch ein der zentralen Kommunikationseinrichtung PBX zugeordnetes - nicht dargestelltes - Kommunikationsendgerät sein.

Im folgenden wird dargestellt, wie die weitere Bearbeitung eines eingehenden Rufes an einen sowohl an der zentralen Kommunikationseinrichtung PBX als auch im VoIP-Kommunikationssystem, speziell im Registrierungsleitrechner RGSRV, registrierten Teilnehmer erfolgt.

An dem Lokalisierungsleitrechner PRSRV treffe eine Rufsignalisierung CLL in Form einer SIP-Nachricht ein. Diese Rufsignalisierung stammt entweder aus dem VoIP-Kommunikationssystem LAN oder wurde in Form einer CSTA-Nachricht über die Applikationsschnittstelle APIF von der zentralen Kommunikationseinrichtung PBX bezogen. Im ersten Fall ist der Ursprung des eingehenden Rufes ein - nicht dargestelltes - Kommunikationsendgerät innerhalb des VoIP-Kommunikationssystems LAN, im zweiten Fall ein - nicht dargestelltes - der zentralen Kommunikationseinrichtung zugeordnetes Kommunikationsendgerät.

Der Lokalisierungsleitrechner PRSRV bestimmt, zu welchem Kommunikationsendgerät der eintreffende Ruf durchgestellt werden soll. Der Lokalisierungsleitrechner PRSRV verwendet hierzu aus der Datenbank DB über den Registrierungsleitrechner RGSRV zu beziehende Informationen. Je nach einer anhand der bezogenen Informationen bestimmten Konfiguration des Teilnehmers werden dann vom Lokalisierungsleitrechner PRSRV ein oder mehrere Einladungsnachrichten INV1,INV2 erzeugt und versendet. Eine erste Einladungsnachricht INV1 sei für eine Rufdurchstellung an das erste Kommunikationsendgerät KE1 bestimmt, entsprechend eine zweite Einladungsnachricht INV2 für das zweite Kommunikationsendgerät KE2. Die letztgenannte zweite Einladungsnachricht INV2 wird direkt an das zweite Kommunikationsendgerät KE2 durchgestellt.

Die zweite Einladungsnachricht INV2 enthält in einem Informationsteil beispielsweise den Textinhalt 'Invite: christi an@sip.com', entsprechend der 'Adresse' des Teilnehmers im VoIP-Kommunikationssystem LAN.

Die erste Einladungsnachricht INV1 enthält in einem Informationsteil beispielsweise den Textinhalt 'Invite: 45898@sip.com', entsprechend der Identifizierungsnummer des Teilnehmers in der zentralen Kommunikationseinrichtung PBX. Diese erste Einladungsnachricht INV1 wird über das Gateway in eine an die zentrale Kommunikationseinrichtung PBX angepasste Signalisierungsnachricht SETP umgesetzt. Eine derartige Signalisierungsnachricht SETP entspricht beispielsweise dem DSS1-Protokoll und enthält in einem Informationsteil beispielsweise einen sogenannten Setup-Befehl.

Im folgenden wird ein Verfahren erläutert, mit dessen Implementierung eine weitere gemeinsame Leistungsmerkmalausgestaltung im VoIP-Kommunikationssystem LAN sowie in dem von der zentralen Kommunikationseinrichtung PBX verwalteten - in der Zeichnung lediglich durch das erste Kommunikationsendgerät KE1 dargestellte - Kommunikationsnetz ermöglicht wird.

Viele zentrale Kommunikationseinrichtungen unterstützen eine sogenannten Briefkastefunktion. In einem 'Briefkasten' werden Rückrufwünsche und Nachrichten von Anrufern gespeichert. Am Kommunikationsendgerät KE1 wird ein Rückrufwunsch oder das Vorliegen einer Nachricht dem zugehörigen Teilnehmer z.B. durch einen optischen Hinweis signalisiert.

Zur Verwirklichung dieses Leistungsmerkmals im gesamten Kommunikationssystem CSY ist wie in den vorhergehenden Ausführungen ein erster Teilnehmer im Registrierungsleitrechner RGSRV des VoIP-Kommunikationssystems LAN registriert. Dem ersten Teilnehmer sei das erste Kommunikationsendgerät KE1 zugeordnet. Aktiviert nun ein zweiter Teilnehmer die Briefkastenfunktion für den ersten Teilnehmer, z.B. indem er das Leistungsmerkmal 'Bitte um Rückruf' aktiviert, erfolgt am ersten Kommunikationsendgerät KE1 eine Signalisierung einer 'wartenden Nachricht', in der Fachwelt auch mit 'Message Waiting Indication' bzw. abkürzend MWI bezeichnet.

Zur Übertragung dieser MWI ist in dem Leitrechner SIPSRV eine Routine implementiert, welche in diskreten Zeitabständen eine Abfrage von MWI-Zuständen über die Applikationsschnittstelle APIF an der zentralen Kommunikationseinrichtung durchführt. Eine solche Abfrage wird in der Fachwelt auch als 'Polling' bezeichnet. Ein solcher Polling-Vorgang erfolgt wiederholt durch eine eine CSTA-Anforderungsnachricht 'getMessageWaitingIndicator' aufrufende Routine im Leitrechner SIPSRV z.B. in einem Zeitintervall von einer Minute. Die Argumente der CSTA-Anforderungsnachricht sind dabei eine das Kommunikationsendgerät KE1 kennzeichnende Identifikation. Die CSTA-Antwortnachricht enthält einen booleschen Parameter der eine wartende Nachricht anzeigt oder nicht. Liegt eine wartende Nachricht vor, wird diese in einem Informationsfeld der Antwortnachricht an den Leitrechner SIPSRV gesendet, der diese in eine SIP-Nachricht umwertet und an das für den ersten Teilnehmer im VoIP-Kommunikationssystem LAN registrierte Kommunikationsendgerät KE2 weitergibt.

Der Vorteil dieses Verfahrens besteht darin, dass der erste Teilnehmer nun auch Nachrichten erhält, wenn er sich nicht an seinem ersten Kommunikationsendgerät KE1 befindet. Das zweite für ihn registrierte Kommunikationsendgerät KE2 ist z.B. als mobile Kommunikationseinheit KE2, z.B. in Form eines PDA ('Personal Digital Assistant') ausgestaltet.

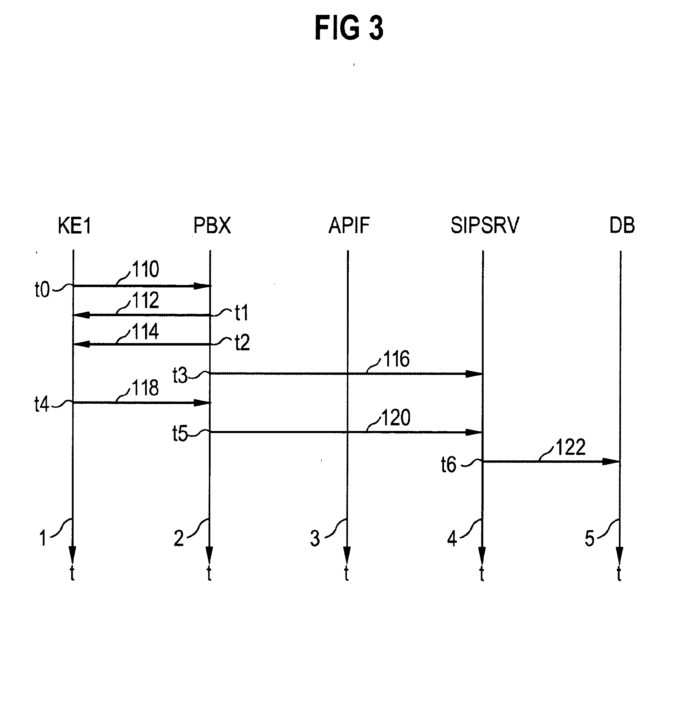

In den folgenden Figuren 3 bis 7 ist jeweils ein chronologisches Ablaufbild zur schematischen Darstellung eines Steuernachrichtenaustauschs zwischen Systemeinheiten des Kommunikationssystems CSY dargestellt. Zwischen den Systemeinheiten ausgetauschte Steuernachrichten, meist in Form von Anforderungsnachrichten ('Request') bzw. Bestätigungsnachrichten ('Confirm'), werden dabei in Abhängigkeit bestimmter ausge führter oder auszuführender Aktionen bzw. aufgetretener Ereignisse in den jeweiligen Systemeinheiten ausgelöst.

Fig. 3 zeigt ein chronologisches Ablaufbild mit einer schematischen Darstellung eines Austauschs von Steuernachrichten zwischen Systemeinheiten des Kommunikationssystems CSY.

Zeitstrahlen 1,2,3,4 und 5 sind in dieser Reihenfolge dem ersten Kommunikationsendgerät KE1, der zentralen Kommunikationseinrichtung PBX, der Applikationsschnittstelle APIF, dem Leitrechner SIPSRV sowie der Datenbank DB zugeordnet. Die Zeitstrahlen 1,2,3,4 und 5 verlaufen von oben nach unten, so dass spätere Zeitpunkte weiter unten liegen als frühere Zeitpunkte.

Mit dem nachfolgen anhand von ausgetauschten Steuernachrichten dargestellten Verfahren wird eine Protokollierung von Verbindungs- bzw. Gesprächsdaten für einen im Kommunikationssystem CSY angemeldeten Teilnehmer erreicht. Eine solche Protokollierung erfolgt üblicherweise in - nicht dargestellten - Steuereinheiten der zentralen Kommunikationseinrichtung PBX für deren zugeordnete Kommunikationsendgeräte KE1, sind aber nicht in Rechnereinheiten wie beispielsweise dem Applikationsleitrechner APSRV im VoIP-Kommunikationssystem LAN zugänglich bzw. auswertbar. Mit dem nachfolgenden Verfahren wird eine Übermittlung von Verbindungs- bzw. Gesprächsdaten in das als paketorientiertes Netzwerk ausgestaltete VoIP-Kommunikationssystem LAN erreicht, wobei durch eine fachübliche Zugriffsmöglichkeit auf das paketorientierte Netzwerk LAN unter Einbeziehung weltweit vernetzter Netzwerke erreicht wird. Die Speicherung von Verbindungs- bzw. Gesprächsdaten erfolgt z.B. mit Datensätzen der Form 'Teilnehmer, Gesprächsart, Startzeit des Gesprächs, Gesprächsdauer, Verbundener Teilnehmer'. Je nach datenschutzrechtlichen Bestimmungen kann ein Datensatz um einige Informationselemente gekürzt werden. Die Datensätze werden nach einer erfolgten - im folgenden erläuterten - Übermittlung von der zentralen Kommunikationsein richtung PBX an den Leitrechner SIPSRV in der Datenbank DB gespeichert.

Zum Zeitpunkt t0 meldet sich der Teilnehmer an seinem ersten Kommunikationsendgerät KE1 an. Eine erfolgte Anmeldung wird in Form einer Ereignisnachricht 110 vom Kommunikationsendgerät KE1 an die zentrale Kommunikationseinrichtung PBX gemeldet, welche fachüblich auch als 'SETUP'-Nachricht 110 bezeichnet wird.

Zum Zeitpunkt t1 übermittelt die zentrale Kommunikationseinrichtung PBX eine Ereignisnachricht 112 an das Kommunikationsendgerät KE1, welche eine Signalisierung eines eingehenden Rufes übermittelt und fachüblich auch als 'ALERTING'-Nachricht 112 bezeichnet wird.

Zum Zeitpunkt t2 übermittelt die zentrale Kommunikationseinrichtung PBX eine Ereignisnachricht 114 an das erste Kommunikationsendgerät KE1, welche einen erfolgten Verbindungsaufbau an das Kommunikationsendgerät KE1 meldet und fachüblich auch als 'CONNECT'-Nachricht 114 bezeichnet wird.

Über die Applikationsschnittstelle APIF wird dieser erfolgte Verbindungsaufbau von der zentralen Kommunikationseinrichtung PBX zusammen mit weiteren Parametern - wie z.B. der Teilnehmernummer des rufenden Teilnehmers, der Verbindungsart usw. - in Form einer CSTA-Ereignisnachricht 116 auch an den angeschlossenen Leitrechner SIPSRV gemeldet. Diese zum Zeitpunkt t3 übersandte Ereignisnachricht 116 wird fachüblich auch als 'CSTA_ESTABLISHED_EVENT' bezeichnet. Der Leitrechner SIPSRV speichert die zusätzlich mitgesandten Gesprächsdaten und verfolgt in einem für diese Verbindung eingerichteten Prozess den Zustand dieser Verbindung.

Zum Zeitpunkt t4 übermittelt das erste Kommunikationsendgerät eine Ereignisnachricht 118 an die zentrale Kommunikationseinrichtung PBX, welche einen erfolgten Verbindungsabbau meldet und fachüblich auch als 'DISCONNECT'-Nachricht 118 bezeichnet wird.

Über die Applikationsschnittstelle APIF wird dieser erfolgte Verbindungsabbau von der zentralen Kommunikationseinrichtung PBX zusammen mit weiteren Parametern in Form einer CSTA-Ereignisnachricht 120 auch an den angeschlossenen Leitrechner SIPSRV gemeldet. Diese zum Zeitpunkt t5 übersandte Ereignisnachricht 120 wird fachüblich auch als 'CSTA_CONNECTION_CLEARED_EVENT' bezeichnet. Der Leitrechner SIPSRV speichert die zusätzlich mitgesandten Gesprächsdaten und verfolgt in einem für diese Verbindung eingerichteten Prozess den Zustand dieser Verbindung.

Der Leitrechner SIPSRV speichert die zusätzlich mitgesandten Gesprächsdaten und beendet den für diese Verbindung eingerichteten Prozess mit einer Generierung eines Gesprächsdatensatzes, welcher zum Zeitpunkt t6 in einem Informationsfeld einer Schreibzugriffsanforderung 122 an die Datenbank DB gesendet wird.

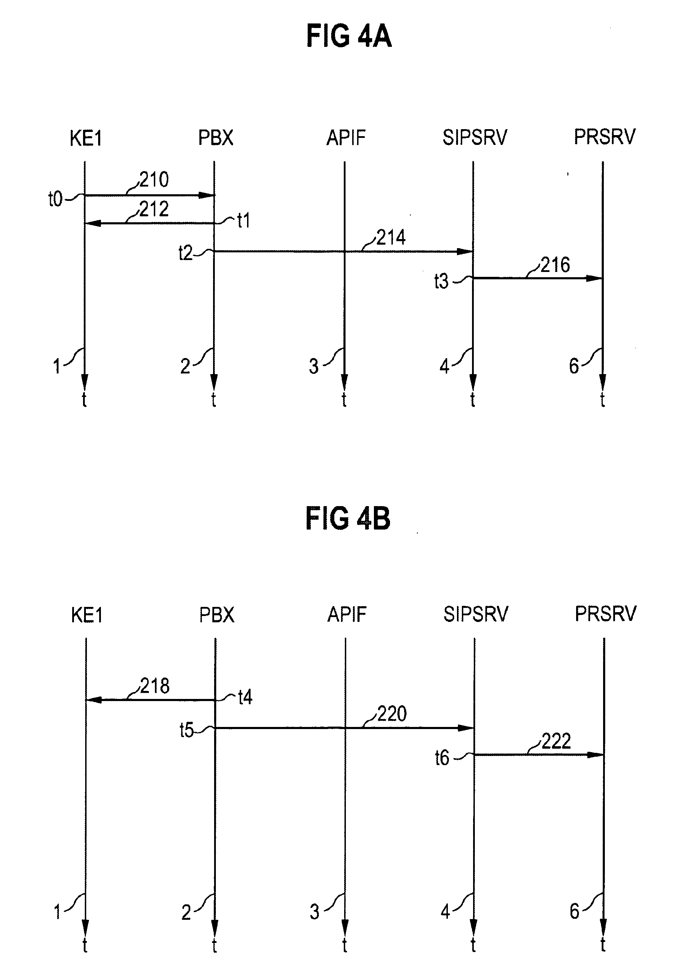

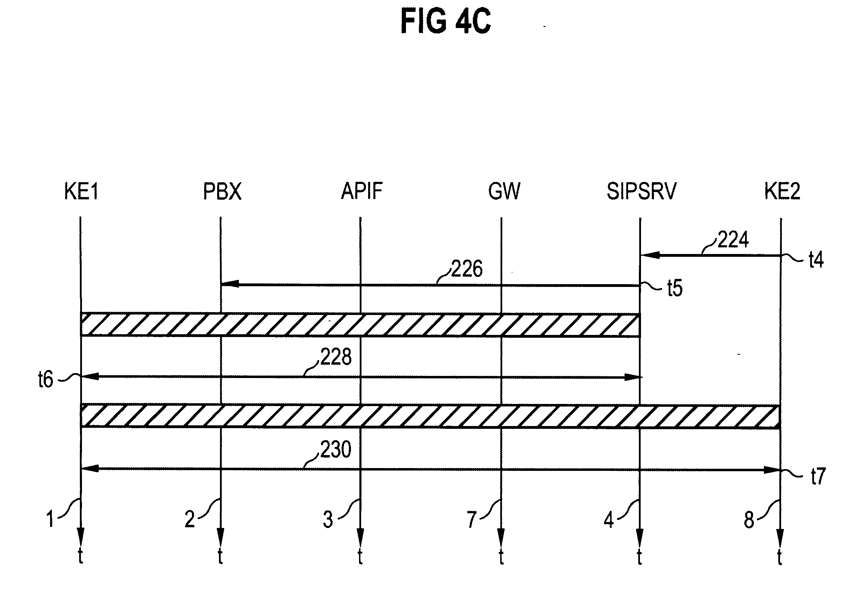

Die Figuren 4A,4B,4C zeigen wiederum ein chronologisches Ablaufbild mit einer schematischen Darstellung eines Austauschs von Steuernachrichten zwischen Systemeinheiten des Kommunikationssystems CSY. Dieser Austausch von Steuernachrichten dient einer Übergabe von an der zentralen Kommunikationseinrichtung eingehenden Verbindungswünschen an das VoIP-Kommunikationssystem LAN. Das zugehörige Verfahren wird anhand der ausgetauschten Steuernachrichten erläutert.

Zeitstrahlen 1,2,3,4 und 6 sind in dieser Reihenfolge dem ersten Kommunikationsendgerät KE1, der zentralen Kommunikationseinrichtung PBX, der Applikationsschnittstelle APIF, dem Leitrechner SIPSRV sowie dem Lokalisierungsleitrechner PRSRV zugeordnet. In Fig. 4C ist ein weiterer, dem Gateway GW zugeordneter Zeitstrahl 6 sowie ein dem zweiten Kommunikationsendgerät KE2 zugeordneter Zeitstrahl 8 dargestellt.

Mit dem nachfolgend beschriebenen Verfahren wird erreicht, dass ein eingehender Anruf an dem der zentralen Kommunikationseinrichtung PBX zugeordneten Kommunikationsendgerät KE1 auch an das VoIP-Kommunikationssystem LAN zu einem weiteren, für den Teilnehmer registrierten Kommunikationsendgerät KE2 übergeleitet wird. In umgekehrter - hier nicht dargestellter - Richtung, d.h. eine Überleitung von einem dem VoIP-Kommunikationssystem LAN zugeordneten Kommunikationsendgerät KE2 auf das erste Kommunikationsendgerät KE1 wird diese Überleitung vom Gateway GW gesteuert.

Zum Zeitpunkt t0 meldet sich der Teilnehmer an seinem ersten Kommunikationsendgerät KE1 an. Eine erfolgte Anmeldung wird in Form einer Ereignisnachricht 210 vom Kommunikationsendgerät KE1 an die zentrale Kommunikationseinrichtung PBX gemeldet, welche fachüblich auch als 'SETUP'-Nachricht 210 bezeichnet wird.

Zum Zeitpunkt t1 übermittelt die zentrale Kommunikationseinrichtung PBX eine Ereignisnachricht 212 an das Kommunikationsendgerät KE1, welche eine Signalisierung eines eingehenden Rufes übermittelt und fachüblich auch als 'ALERTING'-Nachricht 212 bezeichnet wird.

Über die Applikationsschnittstelle APIF wird die Rufsignalisierung von der zentralen Kommunikationseinrichtung PBX in Form einer CSTA-Ereignisnachricht 214 auch an den angeschlossenen Leitrechner SIPSRV gemeldet. Diese zum Zeitpunkt t3 übersandte Ereignisnachricht 116 wird fachüblich auch als 'CSTA_DELIVERED_EVENT' bezeichnet.

Zum Zeitpunkt t3 übermittelt der Leitrechner SIPSRV eine Einladungsnachricht 216 an den Lokalisierungsleitrechner PRSRV, welche auch als 'INVITE'-Nachricht bezeichnet wird. Der Lokalisierungsleitrechner PRSRV ermittelt in einer Datenbank - beispielsweise in einer nicht dargestellten internen Daten bank oder auch in der zentralen Datenbank DB - aus in der Einladungsnachricht 216 enthaltenen Informationen über den Teilnehmer, ob dieser im VoIP-Kommunikationssystem LAN angemeldet ist und ob diesem dort ein Kommunikationsendgerät zugeordnet ist. Der Lokalisierungsleitrechner PRSRV sendet bei einer Zuordnung von Kommunikationsendgeräten eine - nicht dargestellte - Einladungsnachricht an jedes dieser Kommunikationsendgeräte. Eines der dem Teilnehmer im VoIP-Kommunikationssystem LAN zugeordneten Kommunikationsendgeräte ist beispielsweise das zweite Kommunikationsendgerät KE2.

Das weitere Verfahren unterteilt sich in zwei Fälle. Im ersten Fall - vgl. Fig. 4B - nimmt der Teilnehmer das Gespräch am ersten Kommunikationsendgerät KE1 entgegen, im zweiten Fall - vgl. Fig. 4C - nimmt der Teilnehmer das Gespräch am zweiten Kommunikationsendgerät KE2 entgegen.

Fig. 4B zeigt eine Fortsetzung des chronologischen Ablaufbilds ausgetauschter Steuernachrichten mit einer Rufannahme des Teilnehmers in dem der zentralen Kommunikationseinrichtung PBX zugeordneten ersten Kommunikationsendgerät KE1.

Zum Zeitpunkt t4 übermittelt die zentrale Kommunikationseinrichtung PBX eine Ereignisnachricht 218 an das erste Kommunikationsendgerät KE1, welche einen erfolgten Verbindungsaufbau an das Kommunikationsendgerät KE1 meldet und fachüblich auch als 'CONNECT'-Nachricht 218 bezeichnet wird.

Über die Applikationsschnittstelle APIF wird dieser erfolgte Verbindungsaufbau von der zentralen Kommunikationseinrichtung PBX in Form einer CSTA-Ereignisnachricht 220 auch an den angeschlossenen Leitrechner SIPSRV gemeldet. Diese zum Zeitpunkt t5 übersandte Ereignisnachricht 220 wird fachüblich auch als 'CSTA_ESTABLISHED_EVENT' bezeichnet.

Die Aufgabe des Leitrechners SIPSRV besteht jetzt darin, die Rufsignalisierung bei den im VoIP-Kommunikationssystem LAN auf den Teilnehmer registrierten Kommunikationsendgeräten KE2 zu beenden.

Zum Zeitpunkt t6 übermittelt der Leitrechner SIPSRV hierzu eine Abbruchnachricht 222 an den Lokalisierungsleitrechner PRSRV, welche auch als 'CANCEL'-Nachricht bezeichnet wird. Der Lokalisierungsleitrechner PRSRV ermittelt in einer Datenbank aus in der Abbruchnachricht 222 enthaltenen Informationen über den Teilnehmer, welche Rufsignalisierung in welchen dem Teilnehmer im VoIP-Kommunikationssystem LAN zugeordneten Kommunikationsendgeräten KE2 zu beenden ist. Der Lokalisierungsleitrechner PRSRV sendet nach dieser Ermittlung eine - nicht dargestellte - Abbruchnachricht an jedes dieser Kommunikationsendgeräte KE2.

Fig. 4C zeigt eine Fortsetzung des chronologischen Ablaufbilds ausgetauschter Steuernachrichten mit einer Rufannahme des Teilnehmers in dem dem VoIP-Kommunikationssystem LAN zugeordneten zweiten Kommunikationsendgerät KE2.

Nach einer Entgegennahme der Kommunikationsverbindung am zweiten Kommunikationsendgerät übermittelt das zweite Kommunikationsendgerät KE2 zum Zeitpunkt t4 eine Ereignisnachricht 224 an den Kommunikationsleitrechner SIPSRV, welche diesem einen erfolgten Verbindungsaufbau meldet und fachüblich auch als 'CONNECT'-Nachricht 224 bezeichnet wird.

Im folgenden wird zunächst eine erste Kommunikationsverbindung zwischen dem Leitrechner SIPSRV und dem zweiten Kommunikationsendgerät aufgebaut. Der Leitrechner SIPSRV baut zusätzlich eine zweite Kommunikationsverbindung zu dem dem Teilnehmer an der zentralen Kommunikationseinrichtung PBX zugeordneten ersten Kommunikationsendgerät KE1 auf, während die erste Kommunikationsverbindung gehalten wird. Im Zuge eines sogenannten 'Multi Step Transfers' werden die beiden Kommunikationsverbindungen dann verbunden, so dass der Teilnehmer schließlich am zweiten Kommunikationsendgerät KE2 den am ers ten Kommunikationsendgerät KE1 eintreffenden Ruf entgegennehmen kann.

Zum Zwecke einer anschaulichen Darstellung einer Übergabe der Kommunikationsverbindung ist in Fig. 4C ein dem ersten Kommunikationsendgerät KE1 zugeordneter Zeitstrahl 1 eingeführt.

Bei der genannten Darstellung ist zu beachten, dass ein Austausch von Steuer-, Signalisierungs- oder Nutzdaten nicht mit dem eigentlichen Kommunikationsendgerät KE1 erfolgt, sondern vielmehr mit einer das Kommunikationsendgerät KE1 verwaltenden Instanz in der zentralen Kommunikationseinrichtung PBX. Die Darstellung zweier Zeitstrahlen 1,2 für die Instanz des ersten Kommunikationsendgeräts KE1 in der zentralen Kommunikationseinrichtung PBX sowie für die zentrale Kommunikationseinrichtung PBX selber verfolgt den Zweck einer Unterscheidung. Ein Aufbau der Kommunikationsverbindung erfolgt mit der Instanz des ersten Kommunikationsendgeräts KE1 während die zentrale Kommunikationseinrichtung PBX selber für eine Steuerung der Kommunikationsverbindung zuständig ist.

Der Leitrechner sendet über die Applikationsschnittstelle APIF zum Zeitpunkt t5 eine CSTA-Anforderungsnachricht 226 an die zentrale Kommunikationseinrichtung PBX, die eine Umleitung der Kommunikationsverbindung anfordert. Diese Anforderungsnachricht 226 wird fachüblich auch als 'CSTA_DEFLECT_CALL_REQUEST' bezeichnet. Ein darstellungsbedingte Überkreuzung der Anforderungsnachricht 226 mit dem Zeitstrahl 7 des Gateways GW ist nicht in der Weise zu werten, dass die Anforderungsnachricht 226 das Gateway GW realiter passiert.

Die Instanz der ersten Kommunikationseinrichtung KE1 tauscht mit dem Leitrechner SIPSRV anschließend Nutz-, Signalisierungs- bzw. Steuernachrichten aus, welche den Aufbau der Kommunikationsverbindung betreffen und welche dem Fachmann aus den DSS1-Spezifikationen 'Supplementary Services' bzw. den 'SIP Recommendations' für einen Transfer von Kommunikationsverbindungen geläufig sind. Der Aufbau der Kommunikationsverbindung ist in der Zeichnung mit einem schraffierten Block dargestellt. Für den Nutzdatenaustausch wird dabei das Gateway GW verwendet.

Nachdem die erste Kommunikationsverbindung zwischen der Instanz der ersten Kommunikationseinrichtung KE1 und dem Leitrechner SIPSRV aufgebaut ist bestätigen sich zum Zeitpunkt t6 die beiden Partner der Kommunikationsverbindung gegenseitig den erfolgreichen Aufbau mit Hilfe einem - in der Zeichnung als eine zweipfeilige Verbindung dargestellten - Bestätigungsnachrichtenpaar 228.

Die bereits erwähnte zweite - in der Zeichnung mit einem schraffierten Block dargestellten - Kommunikationsverbindung zwischen dem zweiten Kommunikationsendgerät KE2 und der Instanz des ersten Kommunikationsendgeräts wird nach dem erfolgten Austausch des Bestätigungsnachrichtenpaars 228 eingerichtet, wobei diese zweite Kommunikationsverbindung in analoger Weise mit einem - in der Zeichnung als eine zweipfeilige Verbindung dargestellten - Bestätigungsnachrichtenpaar 230 bestätigt wird. Die Umleitung auf das zweite Kommunikationsendgerät KE2 ist damit durchgeführt.

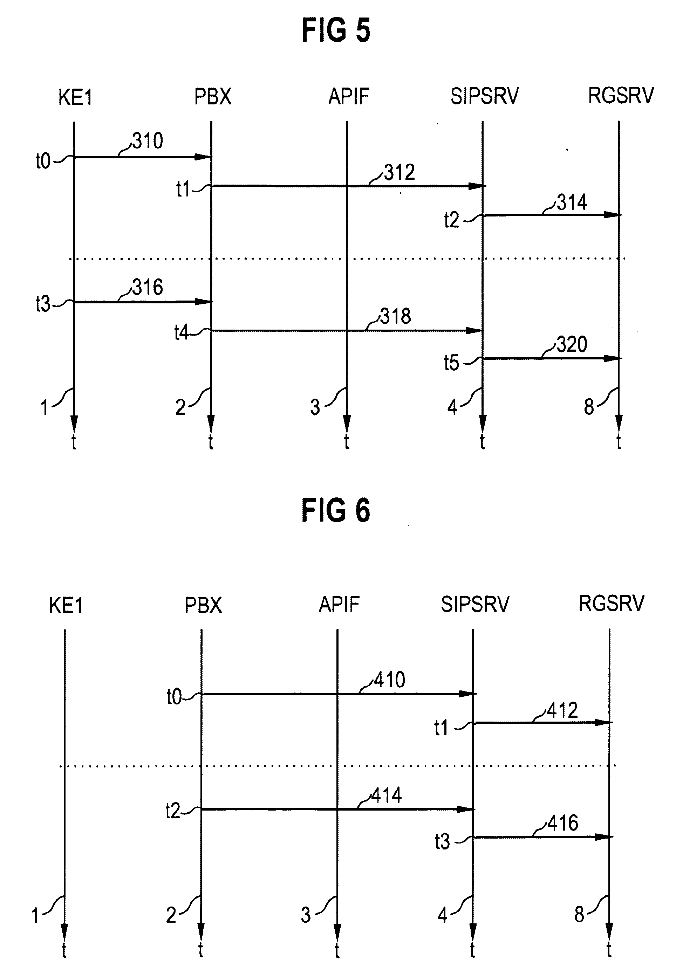

In Fig. 5 ist ein chronologisches Ablaufbild mit einer schematischen Darstellung eines Steuernachrichtenaustauschs zur Realisierung einer kommunikationssystemweiten Verfügbarkeitsinformation eines Teilnehmers dargestellt.

Der Hintergrund des nachfolgend beschriebenen Verfahrens ist, dass ein an der zentralen Kommunikationseinrichtung PBX zugeordneten Endgerät KE1 angemeldeter Teilnehmer, welcher an diesem Kommunikationsendgerät KE1 gerade ein Gespräch führt, im VoIP-Kommunikationssystem LAN als 'nicht verfügbar' registriert werden soll. Dieser Zustand wird durch eine Nichtverfügbarkeitsinformation - 'Besetztinformation' bzw. 'Off Hook Condition' - von der zentralen Kommunikationseinrichtung PBX an das VoIP-Kommunikationssystem LAN gemeldet, um einen rufenden Teilnehmer aus dem VoIP-Kommunikationssystem LAN über die Nichtverfügbarkeit des gerufenen Teilnehmers zu informieren.

Eine vor einem Verbindungsaufbau hinterfragte Nichtverfügbarkeitsinformation bewirkt weiterhin, dass im Besetztfall des ersten Kommunikationsendgeräts KE1 keine Kommunikationsverbindung zwischen dem rufenden Teilnehmers im VoIP-Kommunikationssystem LAN über das Gateway GW und die zentrale Kommunikationseinrichtung PBX zum ersten Kommunikationsendgerät KE1 aufgebaut wird. Durch diese Maßnahme ergibt sich also eine vorteilhafte Einsparung an Netzbandbreite.

Das Verfahren wird wiederum anhand ausgetauschter Steuernachrichten beschrieben. Zeitstrahlen 1,2,3,4 und 8 sind in dieser Reihenfolge dem ersten Kommunikationsendgerät KE1, der zentralen Kommunikationseinrichtung PBX, der Applikationsschnittstelle APIF, dem Leitrechner SIPSRV sowie dem Registrierungsleitrechner RGSRV zugeordnet. Die Zeitstrahlen 1,2,3,4 und 8 verlaufen von oben nach unten, so dass spätere Zeitpunkte weiter unten liegen als frühere Zeitpunkte.

Der erste Teilnehmer hebt an seinem ersten Kommunikationsendgerät KE1 den Hörer ab bzw. belegt an einer Softwareapplikation KE1 eine zugeordnete Leitungsressource. Zum Zeitpunkt t0 wird dieses Ereignis vom ersten Kommunikationsendgerät KE1 an die zentrale Kommunikationseinrichtung PBX in Form einer Ereignisnachricht 310 übermittelt.

Das Ereignis des Abhebens durch den Teilnehmer wird weiterhin zum Zeitpunkt t1 von der zentralen Kommunikationseinrichtung PBX über die Applikationsschnittstelle APIF an den Leitrechner SIPSRV in Form einer Ereignisnachricht 312 gemeldet. Diese CSTA-Ereignisnachricht 312 wird fachüblich auch als 'SERVICE_INIT_EVENT' bezeichnet.

Der Leitrechner SIPSRV nimmt die Ereignisnachricht 312 entgegen und bearbeitet diese. Zum Zeitpunkt t2 sendet der Leitrechner eine Anforderungsnachricht 314 an den Registrierungsleitrechner RGSRV - 'SIP Registrar' - die eine Abmeldung des Kommunikationsendgeräts in Datenbeständen des Registrierungsleitrechner RGSRV einleitet. Die Anforderungsnachricht 314 wird fachüblich auch als 'REGISTER'-nachricht 314 bezeichnet und weist den Registrierungsleitrechner RGSRV durch ein auf den Wert Null (0) eingestelltes, sogenannte 'EXPIRE'-Argument eine Abmeldung bzw. De-Registrierung des ersten Kommunikationsendgeräts KE1 an.

Der Registrierungsleitrechner RGSRV nimmt nach dem Erhalt der Anforderungsnachricht 314 hin eine Änderung in den für das Kommunikationsendgerät KE1 reservierten Datenbeständen vor, in deren Folge dieses jetzt als 'nicht verfügbar' vermerkt wird.

Nach einem - in der Zeichnung durch eine gepunktete Linie dargestellten - Zeitraum, in der der Teilnehmer am Kommunikationsendgerät KE1 eine aktive Kommunikationsverbindung unterhält, beendet dieser die Verbindung z.B. durch auflegen des Hörers.

Zum Zeitpunkt t3 wird dieses Ereignis vom ersten Kommunikationsendgerät KE1 an die zentrale Kommunikationseinrichtung PBX in Form einer Ereignisnachricht 316 übermittelt.

Dieses Ereignis wird zum Zeitpunkt t4 von der zentralen Kommunikationseinrichtung PBX über die Applikationsschnittstelle APIF an den Leitrechner SIPSRV in Form einer Ereignisnachricht 318 gemeldet. Diese CSTA-Ereignisnachricht 318 wird fachüblich auch als 'CONNECT_CLEARED_EVENT' bezeichnet.

Der Leitrechner SIPSRV nimmt die Ereignisnachricht 318 entgegen und bearbeitet diese. Zum Zeitpunkt t5 sendet der Leit rechner SIPSRV eine Anforderungsnachricht 320 an den Registrierungsleitrechner RGSRV, die eine Abmeldung des Kommunikationsendgeräts KE1 in Datenbeständen Registrierungsleitrechner RGSRV einleitet. Die Anforderungsnachricht 320 wird fachüblich auch als 'REGISTER'-nachricht 320 bezeichnet und weist den Registrierungsleitrechner RGSRV durch ein auf eine Wert größer Null (0) eingestelltes, sogenannte 'EXPIRE'-Argument eine Anmeldung bzw. Registrierung des ersten Kommunikationsendgeräts KE1 an.

Der Registrierungsleitrechner RGSRV nimmt nach dem Erhalt der Anforderungsnachricht 320 hin eine Änderung in den für das Kommunikationsendgerät KE1 reservierten Datenbeständen vor, in deren Folge dieses jetzt als 'verfügbar' vermerkt wird.

In Fig. 6 ist ein zu Fig. 5 weitgehend analoges Verfahren an einem chronologischen Ablaufbild mit einer schematischen Darstellung eines Steuernachrichtenaustauschs zur Realisierung einer kommunikationssystemweiten Verfügbarkeitsinformation eines Teilnehmers dargestellt. Im Unterschied zum Verfahren nach Fig. 5 beruht eine Nichtverfügbarkeit bzw. Verfügbarkeit des Teilnehmers bei dem jetzt dargestellten Verfahren darin, dass das dem Teilnehmer zugeordnete erste Kommunikationsendgerät KE1 außer Betrieb geht bzw. wieder in Betrieb genommen wird. Ein Außer-Betrieb-Zustand wird beispielsweise durch ziehen der Steckverbindung zwischen dem Kommunikationsendgerät KE1 und einer das Kommunikationsendgerät KE1 mit der zentralen Kommunikationseinrichtung PBX verbindendenden - nicht dargestellten - Leitung mit Anschlussdose verursacht.

Ein Außerbetriebgehen des ersten Kommunikationsendgeräts KE1 wird zum Zeitpunkt t0 mit einer Ereignisnachricht 410 von der zentralen Kommunikationseinrichtung PBX über die Applikationsschnittstelle APIF an den Leitrechner SIPSRV gemeldet. Diese CSTA-Ereignisnachricht 410 wird fachüblich auch als 'outOfService event' bezeichnet.

Die Abmeldung des Kommunikationsendgeräts KE1 erfolgt analog zum anhand von Fig. 5 erläuterten Ausführungsbeispiel, wobei die dortigen Steuernachrichten 314 bzw. 320 den in Fig. 6 dargestellten Steuernachrichten 412 bzw. 416 entsprechen.

Eine Wiederinbetriebnahme des ersten Kommunikationsendgeräts KE1 wird zum Zeitpunkt t2 mit einer Ereignisnachricht 414 von der zentralen Kommunikationseinrichtung PBX über die Applikationsschnittstelle APIF an den Leitrechner SIPSRV gemeldet. Diese CSTA-Ereignisnachricht 414 wird fachüblich auch als 'BackInService event' bezeichnet.

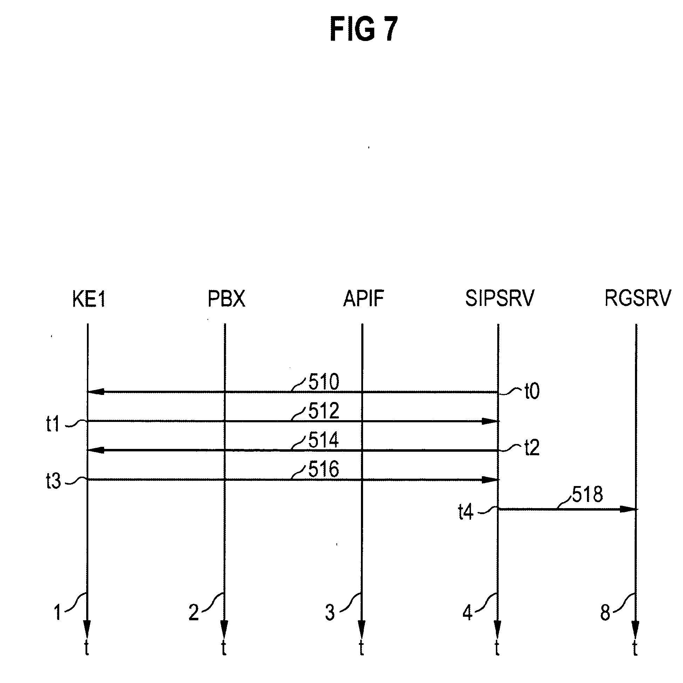

In Fig. 7 ist ein chronologisches Ablaufbild mit einer schematischen Darstellung eines Steuernachrichtenaustauschs zur Realisierung einer kommunikationssystemweiten Synchronisation dargestellt.

Die genannte Synchronisation hat folgenden Hintergrund: Registriert sich ein Teilnehmer an seinem, der zentralen Kommunikationseinrichtung zugeordneten ersten Kommunikationsendgerät KE1, unterstellt er auch eine - mit Hilfe eines vorgenannten Verfahrens erfolgende - Anmeldung im VoIP-Kommunikationssystem LAN an einem ihm dort zugeordneten zweiten Kommunikationsendgerät KE2.

Bei einem Hochfahren des Leitrechners SIPSRV ist jedoch bislang keine Funktion vorgesehen, die eine Überprüfung einer Anmeldung - auch 'PIN Code Activation' genannt - aller überwachten Kommunikationsendgeräte im VoIP-Kommunikationssystem LAN vornimmt. Meldet sich der Teilnehmer also an, während der Leitrechner aufgrund von Wartungsmaßnahmen oder aufgrund einer Fehlfunktion außer Betrieb ist bzw. sich in einem nichtkommunizierenden Zustand befindet, tritt ein undefinierter Zustand auf.

Mit dem nachfolgend - wiederum anhand ausgetauschter Steuernachrichten - beschriebenen Verfahren werden die vorgenannten Probleme gelöst.

Bei einem Hochfahren des Leitrechners SIPSRV erfolgt eine Abfrage eines Zustandsabbildes - in der Fachwelt auch 'Snapshot' genannt - von Anmeldeinformationen jedes dem VoIP-Kommunikationssystem LAN zugeordneten Kommunikationsendgeräts über die Applikationsschnittstelle. Dieses Verfahren unter Verwendung eines Dienstes für eine dynamische Zustandsabbildung - 'Snapshot Device Service' - ist neben der Ermittlung einer Anmeldeinformation auch für beliebige andere Anpassungen an dynamische Zustandsänderungen einsetzbar, beispielsweise zur Ermittlung von Gesprächszuständen, angebotenen Leistungsmerkmalen usw.

Analog zu den bei Fig. 4C gemachten Ausführung ist auch in Fig. 7 zu beachten, dass ein Austausch von Steuer- und Signalisierungsdaten nicht mit dem eigentlichen Kommunikationsendgerät KE1 erfolgt, sondern mit einer das Kommunikationsendgerät KE1 verwaltenden Instanz in der zentralen Kommunikationseinrichtung PBX. Die Darstellung zweier Zeitstrahlen 1,2 für die Instanz des ersten Kommunikationsendgeräts KE1 in der zentralen Kommunikationseinrichtung PBX sowie für die zentrale Kommunikationseinrichtung PBX bezweckt die exemplarische Darstellung einer Instanz eines Kommunikationsendgeräts wobei für jedes von der zentralen Kommunikationseinrichtung PBX verwaltete Kommunikationsendgerät eine - nicht dargestellte - ähnlich gestaltete Instanz vorliegt.

Zum Zeitpunkt t0 sendet der Leitrechner SIPSRV über die Applikationsschnittstelle APIF an die Instanz des Kommunikationsendgeräts KE1 eine Anforderungsnachricht 510, welche einen Beginn eines Datenermittlungsdienstes - 'Monitor Service' - anweist. Diese Anforderungsnachricht 510 wird fachüblich auch mit 'startMonitor' bezeichnet.

Zum Zeitpunkt t1 sendet die Instanz des Kommunikationsendgeräts KE1 eine positive Bestätigungsnachricht 512 an den Leitrechner SIPSRV, welche eine positive Bestätigung der Anforderungsnachricht 510 meldet. Diese Bestätigungsnachricht 512 wird fachüblich auch mit 'positiveMonitorResponse' bezeichnet.

Zum Zeitpunkt t2 sendet der Leitrechner SIPSRV über die Applikationsschnittstelle APIF an die Instanz des Kommunikationsendgeräts KE1 eine Anforderungsnachricht 514, welche einen Beginn eines Dienstes zur dynamischen Zustandsabbildung anweist. Diese Anforderungsnachricht 514 wird fachüblich auch mit 'SnapshotDeviceService' bezeichnet. In einem Informationsfeld der Anforderungsnachricht 514 sind Argumente zur Identifizierung des Dienstes bzw. des Kommunikationsendgeräts KE1 und zur Art der angeforderten Daten enthalten.

Zum Zeitpunkt t1 sendet die Instanz des Kommunikationsendgeräts KE1 in Antwort der Anforderungsnachricht 514 eine Statusmeldung 516 an den Leitrechner SIPSRV. In einem Informationsfeld der Statusmeldung 516 sind die vorher angeforderten Daten enthalten, beispielsweise also eine Information darüber, dass eine PIN-Aktivierung des ersten Kommunikationsendgeräts KE1 durchgeführt wurde. Diese Statusmeldung 516 wird fachüblich auch mit 'snapshotDeviceData' bezeichnet.

Der Leitrechner SIPSRV nimmt die Statusmeldung 516 entgegen und bearbeitet diese. Zum Zeitpunkt t4 sendet der Leitrechner eine Anforderungsnachricht 518 an den Registrierungsleitrechner RGSRV - 'SIP Registrar' - die bei einer bestehenden PIN-Aktivierung eine Anmeldung des ersten Kommunikationsendgeräts KE1 in Datenbeständen des Registrierungsleitrechner RGSRV einleitet. Die Anforderungsnachricht 518 wird fachüblich auch als 'REGISTER'-Nachricht 518 bezeichnet und weist den Lokalisierungsleitrechner PRSRV je nach Wert des enthaltenen 'EXPIRE'-Arguments - vgl. oben - eine Abmeldung bzw. Anmeldung des ersten Kommunikationsendgeräts KE1 an.

## Patentansprüche

1. Verfahren zur Integration eines paketorientierten Netzwerks (LAN) in ein Kommunikationssystem (CSY)
- mit mindestens einer mit einer Applikationsschnittstelle (APIF) zum Austausch von Kommunikationsdaten mit einem Rechnersystem ausgestalteten zentralen Kommunikationseinrichtung (PBX),
- mit mehreren dem paketorientierten Netzwerk (LAN) zugeordneten Kommunikationsleitrechnern (PRSRV,APSRV,RGSRV) zur Realisierung von dezentralen Signalisierungs- und Nutzdatendiensten,
- mit einem Gateway (GW) zur wechselseitigen Umsetzung von Signalisierungs- und Nutzdaten der zentralen Kommunikationseinrichtung (PBX) und von den dezentralen Signalisierungs- und Nutzdatendiensten ausgetauschten Daten,
wobei
in einem Leitrechner (SIPSRV) Kommunikationsdaten der Applikationsschnittstelle (APIF) und von den dezentralen Signalisierungs- und Nutzdatendiensten ausgetauschte Daten wechselweise umgesetzt werden.

2. Verfahren nach Anspruch 1,
**dadurch gekennzeichnet,**
**dass** für die Gestaltung zwischen dezentralen Signalisierungs- und Nutzdatendienste im paketorientierten Netzwerk (LAN) ausgetauschten Daten das an sich bekannte Protokoll 'SIP' verwendet wird.

3. Verfahren nach einem der Ansprüche 1 bis 2,
**dadurch gekennzeichnet,**
**dass** für die Struktur von Kommunikationsdaten der Applikationsschnittstelle (APIF) das an sich bekannte Protokoll 'CSTA' verwendet wird.

4. Verfahren nach einem der vorhergehenden Ansprüche,
**dadurch gekennzeichnet,**
**dass** ein sich an einem der zentralen Kommunikationseinrichtung (PBX) zugeordneten ersten Kommunikationsendgerät (KE1) anmeldender Teilnehmer an weiteren, für ihn verfügbar vermerkten und an das paketorientierte Netzwerk (LAN) angeschlossenen Kommunikationsendgeräten (KE2) angemeldet wird.

5. Verfahren nach Anspruch 4,
**dadurch gekennzeichnet,**
**dass** zur Anmeldung weiterer, für den Teilnehmer als verfügbar vermerkter und an das paketorientierte Netzwerk (LAN) angeschlossener Kommunikationsendgeräte (KE2) eine über die Applikationsschnittstelle (APIF) an den Leitrechner (SIPSRV) übermittelte Ereignisnachricht ausgewertet wird.

6. Verfahren nach Anspruch 5,
**dadurch gekennzeichnet,**
**dass** der Leitrechner (SIPSRV) nach Auswertung der Ereignisnachricht eine Registrierungsmeldung an einen an das pakeorientierte Netzwerk (LAN) angeschlossenen Registrierungsleitrechner (RGSRV) übermittelt.

7. Verfahren nach einem Ansprüche 1 bis 3,
**dadurch gekennzeichnet,**
**dass** bei einer an einem mit dem paketorientierten Netzwerk (LAN) verbundenen Lokalisierungsleitrechner (PRSRV) eintreffenden Rufsignalisierungsnachricht (CLL) Informationen zum gerufenen Teilnehmer aus dieser Rufsignalisierungsnachricht (CLL) entnommen werden und über einen mit dem paketorientierten Netzwerk (LAN) verbundenen Registrierungsleitrechner (RGSRV) Informationen zur Verfügbarkeit des gerufenen Teilnehmers abgerufen werden.

8. Verfahren nach Anspruch 7,
**dadurch gekennzeichnet,**
**dass** bei Verfügbarkeit des gerufenen Teilnehmers an dessen zugeordnete Endgeräte (KE1;KE2) Einladungsnachrichten gesendet werden.

9. Verfahren nach Anspruch 8,
**dadurch gekennzeichnet,**
**dass** Einladungsnachrichten an der ersten Kommunikationseinrichtung zugeordnete Kommunikationsendgeräte (KE1) über das Gateway (GW) gesendet werden.

10. Verfahren nach Anspruch 9,
**dadurch gekennzeichnet,**
**dass** das Gateway (GW) die Einladungsnachricht in ein von der Kommunikationseinrichtung (PBX) verwendetes Signalisierungsprotokoll umsetzt.

11. Verfahren nach einem der vorhergehenden Ansprüche,
**dadurch gekennzeichnet,**
**dass** eine Protokollierung von Verbindungsdaten unter Verwendung von über die Applikationsschnittstelle (APIF) an den Leitrechner (SIPSRV) übertragene Ereignisnachrichten erfolgt.

12. Verfahren nach Anspruch 11,
**dadurch gekennzeichnet,**
**dass** die Ereignisnachrichten in Folge eines Verbindungsaufbaus bzw. Verbindungsabbaus eines der zentralen Kommunikationseinrichtung (PBX) zugeordneten Kommunikationsendgeräts (KE1) generiert werden.

13. Verfahren nach einem der Ansprüche 11 oder 12,
**dadurch gekennzeichnet,**
**dass** der Leitrechner (SIPSRV) anhand der Ereignisnachrichten Verbindungsdaten bestimmt und diese in Form eines Datensatzes an ein Speichermittel (DB) übergibt.

14. Verfahren nach Anspruch 13,
**dadurch gekennzeichnet,**
**dass** der Datensatz Informationen zu einem Teilnehmer und dessen verbundenen Teilnehmer, zur Gesprächsart sowie zur Startzeit und Dauer des Gesprächs enthält.

15. Verfahren nach einem der vorhergehenden Ansprüche,
**dadurch gekennzeichnet,**
**dass** ein Wechsel eines Verfügbarkeitszustand eines mit dem paketorientierten Netzwerk (LAN) verbundenen Kommunikationsendgeräts (KE2) vom Leitrechner (SIPSRV) über die Applikationsschnittstelle (APIF) an die Kommunikationseinrichtung (PBX) gemeldet wird.

16. Verfahren nach Anspruch 15,
**dadurch gekennzeichnet,**
**dass** ein negativer Verfügbarkeitszustand des Kommunikationsendgeräts (KE2) durch
- eine bestehende oder sich in Einrichtung befindende Kommunikationsverbindung an diesem Kommunikationsendgerät (KE2);
- eine Trennung der Verbindung des Kommunikationsendgeräts (KE2) zum paketorientierten Netzwerks (LAN); oder
- durch einen Defekt des Kommunikationsendgeräts (KE2) eintritt.

17. Verfahren nach einem der Ansprüche 15 oder 16,
**dadurch gekennzeichnet,**
**dass** ein über die Applikationsschnittstelle (APIF) gemeldeter negativer Verfügbarkeitszustand eines mit dem paketorientierten Netzwerk (LAN) verbundenen Kommunikationsendgeräts (KE2) in der zentralen Kommunikationseinrichtung (PBX) als Besetztzustand umgewertet wird.

18. Verfahren nach einem der vorhergehenden Ansprüche,
**dadurch gekennzeichnet,**
**dass** bei einer Inbetriebnahme des Leitrechners (SIPSRV) ein Zustandsabbild aller der Kommunikationseinrichtung (PBX) zugeordneten Kommunikationsendgeräte (KE1) mit Hilfe von über die Applikationsschnittstelle (APIF) bezogenen Statusmeldungen (516) eingerichtet wird.

19. Verfahren nach Anspruch 18,
**dadurch gekennzeichnet,**
**dass** das Zustandsabbild Anmeldeinformationen jedes der Kommunikationseinrichtung (PBX) zugeordneten Kommunikationsendgeräts (KE1) enthält.

20. Anordnung zur Integration eines paketorientierten Netzwerks (LAN) in ein Kommunikationssystem (CSY)
- mit mindestens einer mit einer Applikationsschnittstelle (APIF) zum Austausch von Kommunikationsdaten mit einem Rechnersystem ausgestalteten Kommunikationseinrichtung (PBX),
- mit mehreren dem paketorientierten Netzwerk (LAN) zugeordneten Kommunikationsleitrechnern (PRSRV,APSRV,RGSRV) zur Realisierung von dezentralen Signalisierungs- und Nutzdatendiensten,
- mit einem Gateway (GW) zur wechselseitigen Umsetzung von Signalisierungs- und Nutzdaten der zentralen Kommunikationseinrichtung (PBX) und von den dezentralen Signalisierungs- und Nutzdatendiensten ausgetauschten Daten,
wobei der Applikationsschnittstelle (APIF) ein mit den Kommunikationsleitrechnern (PRSRV,APSRV,RGSRV) kommunizierender Leitrechner (SIPSRV) zur wechselseitigen Umsetzung von Kommunikationsdaten der Applikationsschnittstelle (APIF) und von den dezentralen Signalisierungs- und Nutzdatendiensten ausgetauschten Daten zugeordnet ist.

## Claims

1. Method for integration of a packet-oriented network (LAN) in a communication system (CSY)
- with at least one central communication device (PBX) embodied with an application interface (APIF) for exchange of communication data with a computer system,
- with a number of communication control processors (PRSRV,APSRV,RGSRV) assigned to the packet-oriented network (LAN) for implementation of decentralised signalling and user data services,
- with a gateway (GW) for bilateral exchange of signalling and user data of the central communication device (PBX) and of data exchanged by the decentralised signalling and user data services, with
a control processor (SIPSRV) bilaterally converting communication data of the application interface (APIF) and of data exchanged by the decentralised signalling and user data services.

2. Method according to claim 1, **characterised in that**, for the embodiment of data exchanged between decentralised signalling and user data services in the packet-oriented network (LAN) the protocol 'SIP' known per-se is used.

3. Method according to one of the claims 1 to 2,
**characterised in that**,
for the structure of communication data of the application interface (APIF) the protocol 'CSTA' known per-se is used.

4. Method according to one of the previous claims
**characterised in that**
a user registered at a first communication terminal (KE1) assigned to the central communication device (PBX) is registered at further communication terminals (KE2) marked as available for him and connected to the packet-oriented network (LAN).

5. Method according to claim 4,
**characterised in that**
to register further communication terminals (KE2) flagged as available for the user and connected to the packet-oriented network (LAN), an event message transferred via the application interface (APIF) to the control processor (SIPSRV) is evaluated.

6. Method according to claim 5,
**characterised in that** the control processor
(SIPSRV), after evaluating the event message, transfers a registration message to a Registration Server (RGSRV) connected to the packet-oriented network (LAN).

7. Method according to one of claims 1 to 3,
**characterised in that**
for a call signalling message (CLL) arriving at a Presence and Availability Server PRSRV (PRSRV) connected to the packet-oriented network (LAN), information for the called user is taken from this call signalling message (CLL) and via a Registration Server (RGSRV) connected to the packet-oriented network (LAN) information is retrieved on the availability of the called user.

8. Method according to claim 7,
**characterised in that**,
if the called user is available, invitation messages are sent to his assigned terminals (KE1;KE2).

9. Method according to claim 8,
**characterised in that**
invitation messages to the first communication terminals (KE1) assigned to the communication device are sent via the gateway (GW).

10. Method according to claim 9,
**characterised in that**
the gateway (GW) converts the invitation message into a signalling protocol used by the communication device (PBX).

11. Method according to one of the previous claims
**characterised in that**
the call data is logged using event messages transferred via the application interface (APIF) to the control processor (SIPSRV).

12. Method according to claim 11,
**characterised in that**
the event messages are generated as a result of the call setup or call clearing of a communication terminal (KE1) assigned to the central communication device (PBX).

13. Method according to one of the claims 11 or 12,
**characterised in that**
the control processor (SIPSRV) determines call data on the basis of the event message and transfers this in the form of a data record to a means of storage (DB).

14. Method according to claim 13,
**characterised in that**
the data record contains information about a user and his connected users, about the type of call and the start time and duration of the call.

15. Method according to one of the previous claims
**characterised in that**
a change of an availability state of a communication terminal (KE2) connected to the packet-oriented network (LAN) is notified by the control processor (SIPSRV) via the application interface (APIF) to the communication device (PBX).

16. Method according to claim 15,
**characterised in that**
a negative availability state of the communication terminal (KE2) occurs by
- an existing communications connection or a connection being established at this communication terminal(KE2) ;
- a disconnection of the connection of the communication terminal (KE2) to the packet-oriented network(LAN);or
- by a defect of the communication terminal (KE2).

17. Method according to one of the claims 15 or 16,
**characterised in that**
a negative availability state of a communication terminal (KE2) connected to the packet-oriented network (LAN) notified via the application interface (APIF) is interpreted in the central communication device (PBX) as busy state.

18. Method according to one of the previous claims
**characterised in that**
With the putting into service of the control processor (SIPSRV) a status image of all the communication terminals (KE1) assigned to the communication device (PBX) is created with the aid of status messages (516) obtained via the application interface (APIF).

19. Method according to claim 18, **characterised in that** the status image contains registration information of each communication terminal (KE1) assigned to the communication device (PBX) .

20. Arrangement for integration of a packet-oriented network (LAN) in a communication system (CSY)
- with at least one communication device (PBX) embodied with an application interface (APIF) for exchange of communication data with a computer system,
- with a number of communication control processors (PRSRV, APSRV, RGSRV) assigned to the packet-oriented network (LAN) for implementation of decentralised signalling and user data services,
- with a gateway (GW) for bilateral conversion of signalling and user data of the central communication device (PBX) and of data exchanged by the decentralised signalling and user data services,
with the application interface (APIF) being assigned a control processor (SIPSRV) communicating the communication control processors (PRSRV, APSRV, RGSRV)for bilateral exchange of communication data of the application interface (APIF) and of the data exchanged by the decentralised signalling and user data services.

## Revendications

1. Procédé pour intégrer un réseau orienté paquets (LAN) dans un système de communication (CSY), comprenant
- au moins un dispositif de communication central (PBX) exécuté avec une interface d'application (APIF) pour l'échange de données de communication avec un système d'ordinateurs,
- comprenant plusieurs ordinateurs de communication pilotes (PRSRV, APSRV, RGSRV) affectés au réseau orienté paquets (LAN) pour la réalisation de services décentralisés de signalisation et de données utiles,
- comprenant une passerelle (GW) pour la conversion, dans les deux sens, de données de signalisation et de données utiles du dispositif de communication central (PBX) et de données échangées par les services décentralisés de signalisation et de données utiles,
des données de communication de l'interface d'application (APIF) et des données échangées par les services décentralisés de signalisation et de données utiles étant converties dans les deux sens dans un ordinateur pilote (SIPSRV).

2. Procédé selon la revendication 1,
**caractérisé en ce**
**que** le protocole `SIP' connu en soi est utilisé pour la conception de données échangées dans le réseau orienté paquets (LAN) entre les services décentralisés de signalisation et de données utiles.

3. Procédé selon l'une quelconque des revendications 1 à 2,
**caractérisé en ce**
**que** le protocole 'CSTA' connu en soi est utilisé pour la structure de données de communication de l'interface d'application (APIF) .

4. Procédé selon l'une quelconque des revendications précédentes,
**caractérisé en ce**
**qu'**un abonné s'enregistrant sur un premier terminal de communication (KE1) affecté au dispositif de communication central (PBX) est enregistré sur d'autres terminaux de communication (KE2) mentionnés disponibles pour lui et connectés au réseau orienté paquets (LAN).

5. Procédé selon la revendication 4,
**caractérisé en ce**
**que**, pour l'enregistrement d'autres terminaux de communication (KE2) mentionnés comme disponibles pour l'abonné et connectés au réseau orienté paquets (LAN), un message d'événement transmis à l'ordinateur pilote (SIPSRV) par l'intermédiaire de l'interface d'application (APIF) est évalué.

6. Procédé selon la revendication 5,
**caractérisé en ce**
**que** l'ordinateur pilote (SIPSRV), après l'évaluation du message d'événement, transmet un message d'enregistrement à un ordinateur d'enregistrement pilote (RGSRV) connecté au réseau orienté paquets (LAN).

7. Procédé selon l'une quelconque des revendications 1 à 3,
**caractérisé en ce**
**que**, en cas d'un message de signalisation d'appel (CLL) entrant sur un ordinateur de localisation pilote (PRSRV) connecté au réseau orienté paquets (LAN), des informations concernant l'abonné appelé sont extraites de ce message de signalisation d'appel (CLL) et en ce que des informations concernant la disponibilité de l'abonné appelé sont appelées par l'intermédiaire d'un ordinateur d'enregistrement pilote (RGSRV) connecté au réseau orienté paquets (LAN).

8. Procédé selon la revendication 7,
**caractérisé en ce**
**qu'**en cas de disponibilité de l'abonné appelé, des messages d'invitation sont émis aux terminaux (KE1 ; KE2) affectés à cet abonné.

9. Procédé selon la revendication 8,
**caractérisé en ce**
**que** par l'intermédiaire de la passerelle (GW), des messages d'invitation sont émis aux terminaux de communication (KE1) affectés au premier dispositif de communication.

10. Procédé selon la revendication 9,
**caractérisé en ce**
**que** la passerelle (GW) convertit le message d'invitation en un protocole de signalisation utilisé par le dispositif de communication (PBX).

11. Procédé selon l'une quelconque des revendications précédentes,
**caractérisé en ce**
**qu'**une mise sous protocole de données de liaison est réalisée moyennant des messages d'événement transmis à l'ordinateur pilote (SIPSRV) par l'intermédiaire de l'interface d'application (APIF).

12. Procédé selon la revendication 11,
**caractérisé en ce**
**que** les messages d'événement sont générés suite à un établissement de liaison resp. à une déconnexion d'un terminal de communication (KE1) affecté au dispositif de communication central (PBX) .

13. Procédé selon l'une quelconque des revendications 11 ou 12,
**caractérisé en ce**
**que** l'ordinateur pilote (SIPSRV) détermine des données de liaison à l'aide des messages d'événement et transfère celles-ci à un moyen de mémoire (DB) sous forme d'un enregistrement de données.

14. Procédé selon la revendication 13,
**caractérisé en ce**
**que** l'enregistrement de données contient des informations concernant un abonné et son abonné connecté, concernant le mode de communication ainsi que le temps de démarrage et la durée de la communication.

15. Procédé selon l'une quelconque des revendications précédentes,
**caractérisé en ce**
**qu'**un changement d'un état de disponibilité d'un terminal de communication (KE2) connecté au réseau orienté paquets (LAN) est signalé par l'ordinateur pilote (SIPSRV) au dispositif de communication (PBX) par l'intermédiaire de l'interface d'application (APIF).

16. Procédé selon la revendication 15,
**caractérisé en ce**
**qu'**un état de disponibilité négatif du terminal de communication (KE2) se produit en raison
- d'une liaison de communication existante ou se trouvant en cours de configuration sur ce terminal de communication (KE2) ;
- d'une coupure de la liaison du terminal de communication (KE2) vers le réseau orienté paquets (LAN) ; ou
- d'un défaut du terminal de communication (KE2).

17. Procédé selon l'une quelconque des revendications 15 ou 16,
**caractérisé en ce**
**qu'**un état de disponibilité négatif, signalé par l'intermédiaire de l'interface d'application (APIF), d'un terminal de communication (KE2) connecté au réseau orienté paquets (LAN) est converti dans le dispositif de communication central (PBX) en tant qu'état occupé.

18. Procédé selon l'une quelconque des revendications précédentes,
**caractérisé en ce**
**que** lors d'une mise en service de l'ordinateur pilote (SIPSRV), une représentation d'état de tous les terminaux de communication (KE1) affectés au dispositif de communication (PBX) est configurée à l'aide de messages d'état (516) reçus par l'intermédiaire de l'interface d'application (API).

19. Procédé selon la revendication 18,
**caractérisé en ce**
**que** la représentation d'état contient des informations d'enregistrement de chaque terminal de communication (KE1) affecté au dispositif de communication (PBX).

20. Dispositif destiné à intégrer un réseau orienté paquets (LAN) dans un système de communication (CSY), comprenant
- au moins un dispositif de communication (PBX) exécuté avec une interface d'application (APIF) pour l'échange de données de communication avec un système d'ordinateurs,
- comprenant plusieurs ordinateurs de communication pilotes (PRSRV, APSRV, RGSRV) affectés au réseau orienté paquets (LAN) pour la réalisation de services décentralisés de signalisation et de données utiles,
- comprenant une passerelle (GW) pour la conversion, dans les deux sens, de données de signalisation et de données utiles du dispositif de communication central (PBX) et de données échangées par les services décentralisés de signalisation et de données utiles,
un ordinateur pilote (SIPSRV) communiquant avec les ordinateurs de communication pilotes (PRSRV, APSRV, RGSRV) pour la conversion dans les deux sens de données de communication de l'interface d'application (APIF) et des données échangées par les services décentralisés de signalisation et de données utiles étant affecté à l'interface d' application (APIF).
